# FASCICULE DE BREVET EUROPEEN

(11) **EP 3 328 933 B1**
(45) Date de publication et mention de la délivrance du brevet: **04.09.2019**
(21) Numéro de dépôt: 16741559.5
(22) Date de dépôt: 07.07.2016
(51) Int. Cl.: C08L 9/00, B60C 1/00

(54) **COMPOSITION DE CAOUTCHOUC COMPRENANT UNE RESINE HYDROCARBONEE DE FAIBLE TEMPERATURE DE TRANSITION VITREUSE**
KAUTSCHUKZUSAMMENSETZUNG ENTHALTEND KOHLENWASSERSTOFFHARZ MIT NIEDRIGER GLASÜBERGANGSTEMPERATUR
RUBBER COMPOSITION COMPRISING HYDROCARBON RESIN HAVING LOW GLASS TRANSITION TEMPERATURE

(30) Priorité: 31.07.2015 FR 1557404
(43) Date de publication de la demande: 06.06.2018
(73) Titulaire: Compagnie Générale des Etablissements Michelin, 63000 Clermont-Ferrand (FR)
(72) Inventeur: LESAGE, Pierre, 63040 Clermont-Ferrand Cedex 9 (FR); HELLOT, Fabien, 63040 Clermont-Ferrand Cedex 9 (FR)
(74) Mandataire: Sidhu, Alban
(86) Numéro de dépôt international: PCT/EP2016/066085
(87) Numéro de publication internationale: WO 2017/021093

(56) Documents cités:
- WO-A1-2013/092429

## Description

L'invention est relative aux compositions, notamment pour pneumatiques et plus particulièrement aux compositions comprenant un système plastifiant à base de résine de faible température de transition vitreuse (Tg).

Depuis que les économies de carburant et la nécessité de protéger l'environnement sont devenues une priorité, il s'est avéré nécessaire de produire des pneumatiques ayant une résistance au roulement réduite, sans pénalisation des autres propriétés du pneumatique. Les manufacturiers ont développé des compositions de pneumatique permettant de diminuer cette résistance au roulement, notamment par l'introduction de silice comme charge renforçante, ou de résine de haute température de transition vitreuse comme plastifiant.

Par exemple, les Demanderesses ont déjà décrit l'utilisation de résines de haute Tg, comme décrit dans les documents WO-2005/087859 ou WO-2006/061064.

Quelques documents décrivent l'utilisation de résines de faible Tg, comme par exemple dans le document JP-2005213486 qui propose l'utilisation de résine de faible Tg à un taux compris entre 0,5 et 5 pce pour améliorer le collant à cru et la faisabilité industrielle des compositions. Le document US-2007/0167557 propose l'utilisation de résine de faible Tg à un taux de 10 pce pour améliorer la résistance à l'écaillement. Quant au document JP-2001144262, il décrit des compositions dont la résistance à l'abrasion et l'adhérence sont améliorées, et qui comprennent des résines de faible Tg.

Néanmoins, les manufacturiers cherchent toujours des solutions pour améliorer en même temps toutes les performances des compositions pour pneumatique et notamment la résistance au roulement, la dureté des compositions cuites, associée au comportement routier et au confort de conduite, en même temps que la viscosité des compositions crues, associée à la facilité de mise en oeuvre industrielle des compositions (processabilité).

A présent, les Demanderesses ont montré que des compositions particulières à base de résine de faible Tg, permettaient d'avoir un compromis amélioré entre de nombreuses performances recherchées pour les compositions de pneumatique, c'est-à-dire la résistance au roulement, la dureté des compositions cuites, en même temps que la viscosité des compositions crues.

L'invention concerne une composition de caoutchouc à base d'au moins un élastomère diénique de température de transition vitreuse (Tg) inférieure à -40°C, une charge renforçante à un taux compris dans un domaine allant de 60 à 110 parties en poids pour cent parties en poids d'élastomère (pce), un système de vulcanisation et une combinaison de plastifiants, ladite combinaison de plastifiants comprenant plus de 10 pce (parties en poids pour cent parties en poids d'élastomère) d'au moins une résine hydrocarbonée de température de transition vitreuse (Tg) comprise entre -40°C et 20°C et un plastifiant complémentaire choisi dans le groupe constitué par les huiles plastifiantes et les résines hydrocarbonées de Tg supérieure à 20°C, le taux total de plastifiant étant compris dans un domaine allant de 25 à 65 pce et les taux de charge renforçante et de plastifiant étant tels que le rapport du taux total de charge et du (i.e. sur le) taux total de plastifiant est compris dans un domaine allant de 1,8 à 2,5.

Préférentiellement, l'invention concerne une composition telle que définie ci-dessus dans laquelle ledit élastomère diénique de Tg inférieure à -40°C est choisi dans le groupe constitué par les polybutadiènes, les polyisoprènes de synthèse, le caoutchouc naturel, les copolymères de butadiène, les copolymères d'isoprène et les mélanges de ces élastomères. De préférence, ledit élastomère diénique de Tg inférieure à -40°C est choisi dans le groupe constitué par les polybutadiènes, les copolymères de butadiène et de styrène, et les mélanges de ces élastomères. De préférence, l'élastomère diénique de Tg inférieure à -40°C comprend un copolymère statistique de butadiène et de styrène (SBR) à un taux compris dans un domaine allant de 80 à 100 pce, de préférence à un taux de 100 pce.

Préférentiellement également, l'invention concerne une composition telle que définie ci-dessus dans laquelle la charge renforçante est choisie dans le groupe constitué par les silices, les noirs de carbone et les mélanges de ces derniers. De préférence, le taux de charge renforçante est compris dans un domaine allant de 65 à 105 pce, de préférence de 70 à 100 pce.

Selon un mode de réalisation préférentiel, l'invention concerne une composition telle que définie ci-dessus dans laquelle la charge renforçante majoritaire est de la silice. De préférence, le taux de silice est compris dans un domaine allant de 55 à 105 pce, de préférence de 60 à 100 pce.

De manière préférentielle, l'invention concerne une composition telle que définie ci-dessus dans laquelle le taux total de plastifiants est compris dans un domaine allant de 30 à 65 pce, de 35 à 60 pce, plus préférentiellement de 40 à 55 pce.

De préférence, l'invention concerne une composition telle que définie ci-dessus dans laquelle le taux de résine hydrocarbonée de Tg comprise entre -40°C et 20°C est compris dans un domaine allant de plus de 10 à 60 pce, de préférence de 12 à 40 pce, plus préférentiellement de 15 à 35 pce.

De préférence également, l'invention concerne une composition telle que définie ci-dessus dans laquelle la résine hydrocarbonée précédemment mentionnée comme résine hydrocarbonée de Tg comprise entre -40°C et 20°C présente une Tg comprise entre -40°C et 0°C, plus préférentiellement entre -30°C et 0°C et plus préférentiellement encore entre -20°C et 0°C.

De préférence encore, l'invention concerne une composition telle que définie ci-dessus dans laquelle la résine hydrocarbonée précédemment mentionnée comme résine hydrocarbonée de Tg comprise entre -40°C et 20°C présente une masse moléculaire moyenne en nombre inférieure à 800 g/mol, de préférence inférieure à 600 g/mol ; et plus préférentiellement, inférieure à 400 g/mol.

Préférentiellement, l'invention concerne une composition telle que définie ci-dessus dans laquelle la résine hydrocarbonée précédemment mentionnée comme résine hydrocarbonée de Tg comprise entre -40°C et 20°C présente un point de ramollissement compris dans un domaine allant de 0 à 50°C, préférentiellement de 0 à 40°C, plus préférentiellement de 10 à 40°C, de préférence de 10 à 30°C.

Préférentiellement également, l'invention concerne une composition telle que définie ci-dessus dans laquelle la résine hydrocarbonée précédemment mentionnée comme résine hydrocarbonée de Tg comprise entre -40°C et 20°C présente un indice de polymolécularité (Ip) inférieur à 3, de préférence inférieur à 2.

De manière préférentielle, l'invention concerne une composition telle que définie ci-dessus dans laquelle le taux de résine hydrocarbonée de Tg supérieure à 20°C est compris dans un domaine allant de 5 à 55 pce, de préférence de 7 à 40 pce, plus préférentiellement de 10 à 35 pce.

De manière préférentielle également, l'invention concerne une composition telle que définie ci-dessus dans laquelle la résine hydrocarbonée précédemment mentionnée comme résine hydrocarbonée de Tg supérieure à 20°C présente une Tg supérieure à 30°C.

De manière plus préférentielle, l'invention concerne une composition telle que définie ci-dessus dans laquelle la résine hydrocarbonée précédemment mentionnée comme résine hydrocarbonée de Tg supérieure à 20°C présente une masse moléculaire moyenne en nombre comprise entre 400 et 2000 g/mol, de préférence entre 500 et 1500 g/mol.

Préférentiellement également, l'invention concerne une composition telle que définie ci-dessus dans laquelle la résine hydrocarbonée précédemment mentionnée comme résine hydrocarbonée de Tg supérieure à 20°C présente un indice de polymolécularité (Ip) inférieur à 3, de préférence inférieur à 2.

De manière préférentielle, l'invention concerne une composition telle que définie ci-dessus comprenant en outre dans la combinaison de plastifiants, une huile plastifiante.

Préférentiellement, l'invention concerne une composition telle que définie ci-dessus dans laquelle l'huile plastifiante est choisie dans le groupe constitué par les huiles naphténiques, les huiles paraffiniques, les huiles MES (Medium Extracted Solvates), les huiles TDAE (Treated Distillate Aromatic Extracts), les huiles minérales, les huiles végétales, les plastifiants éthers, les plastifiants esters, les plastifiants phosphates, les plastifiants sulfonates et les mélanges de ces composés.

Préférentiellement également, l'invention concerne une composition telle que définie ci-dessus dans laquelle le taux d'huile plastifiante est compris dans un domaine allant de 2 à 40 pce, de préférence de 5 à 30 pce.

Alternativement et préférentiellement également, l'invention concerne une composition telle que définie plus haut, qui ne comprend pas d'huile plastifiante dans la combinaison de plastifiants.

Plus préférentiellement, l'invention concerne une composition telle que définie ci-dessus dans laquelle le rapport du taux total de charge et du taux total de plastifiant est compris dans un domaine allant de 1,8 à 2,4, de préférence de 2 à 2,4.

L'invention concerne également un pneumatique comprenant une composition telle que définie ci-dessus.

De préférence, l'invention concerne un pneumatique tel que défini ci-dessus comprenant ladite composition telle que définie ci-dessus dans tout ou partie de la bande de roulement.

Préférentiellement, le pneumatique selon l'invention sera choisi parmi les pneumatiques destinés à équiper un véhicule à deux roues, un véhicule de tourisme, ou encore un véhicule dit « poids lourd » (c'est-à-dire métro, bus, véhicules hors-la-route, engins de transport routier tels que camions, tracteurs, remorques), ou encore des avions, des engins de génie civil, agraire, ou de manutention.

### I- Constituants de la composition

Les compositions de caoutchouc selon l'invention sont à base d'au moins un élastomère diénique de température de transition vitreuse (Tg) inférieure à -40°C, une charge renforçante à un taux compris dans un domaine allant de 60 à 110 parties en poids pour cent parties en poids d'élastomère (pce), un système de vulcanisation, et une combinaison de plastifiants, ladite combinaison de plastifiants comprenant plus de 10 pce (parties en poids pour cent parties en poids d'élastomère) d'au moins une résine hydrocarbonée de température de transition vitreuse (Tg) comprise entre -40°C et 20°C et au moins un plastifiant complémentaire choisi dans le groupe constitué par les huiles plastifiantes, les résines hydrocarbonées de Tg supérieure à 20°C et leurs mélanges, le taux total de plastifiant étant compris dans un domaine allant de 25 à 65 pce, les taux de charge renforçante et de plastifiant étant tels que le rapport du taux total de charge et du taux total de plastifiant est compris dans un domaine allant de 1,8 à 2,5.

Par l'expression «composition à base de» il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en oeuvre pour l'invention peuvent être différentes à l'état non réticulé et à l'état réticulé.

Dans la présente description, sauf indication expresse différente, tous les pourcentages (%) indiqués sont des pourcentages en masse. L'abréviation "pce" (en anglais « phr ») signifie parties en poids pour cent parties d'élastomères présents dans la matrice élastomère, la matrice élastomère désignant la totalité des élastomères présents dans la composition de caoutchouc.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Enfin, lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, une charge renforçante majoritaire est la charge renforçante représentant la plus grande masse par rapport à la masse totale des charges renforçantes dans la composition. Au contraire, un composé « minoritaire » est un composé qui ne représente pas la fraction massique la plus grande parmi les composés du même type.

### I-1 Elastomère diénique

Les compositions peuvent contenir un seul élastomère diénique ou un mélange de plusieurs élastomères diéniques.

Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Les élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles); c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions selon l'invention:
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) un copolymère d'isobutène et d'isoprène (caoutchouc butyle), ainsi que les versions halogénées, en particulier chlorées ou bromées, de ce type de copolymère, étant entendu que pour les besoins de l'invention, sont concernés les élastomères du type (a), (b), (c) et (d) ci-dessus qui ont une Tg inférieure à -40°C.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778, US 6 013 718 et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909, US 6 503 973, WO 2009/000750 et WO 2009/000752). Comme autres exemples d'élastomères fonctionnalisés, on peut citer également des élastomères (tels que SBR, BR, NR ou IR) du type époxydés.

Ces élastomères fonctionnalisés peuvent être utilisés en coupage entre eux ou avec des élastomères non fonctionnalisés. Par exemple, on peut utiliser un élastomère fonctionnalisé silanol ou polysiloxane ayant une extrémité silanol, en mélange avec un élastomère couplés et/ou étoilés à l'étain (décrit dans WO 11/042507), ce dernier représentant un taux compris de 5 à 50%, par exemple de 25 à 50%.

Conviennent de manière préférentielle, les polybutadiènes et en particulier ceux ayant une teneur (% molaire) en unités -1,2 comprise entre 4% et 80% ou ceux ayant une teneur (% molaire) en cis-1,4 supérieure à 80%, les copolymères de butadiène-styrène et en particulier ceux ayant une Tg (température de transition vitreuse (Tg, mesurée selon ASTM D3418) comprise entre 0°C et -70°C et plus particulièrement entre -10°C et -60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%.

En résumé, l'élastomère diénique de la composition est choisi préférentiellement dans le groupe des élastomères diéniques fortement insaturés de Tg inférieure à -40°C est choisi dans le groupe constitué par les polybutadiènes, les polyisoprènes de synthèse, le caoutchouc naturel, les copolymères de butadiène, les copolymères d'isoprène et les mélanges de ces élastomères. De tels élastomères diéniques de Tg inféireure à - 40°C sont plus préférentiellement choisis dans le groupe constitué par les polybutadiènes, les copolymères de butadiène et de styrène, et les mélanges de ces élastomères. Très préférentiellement, l'élastomère diénique de Tg inférieure à - 40°C est un copolymère statistique de butadiène et de styrène (SBR).

Le taux de l'élastomère diénique de Tg inférieure à -40°C est préférentiellement compris dans un domaine allant de 80 à 100 pce, de préférence dans un domaine allant de 90 à 100 pce et très préférentiellement ce taux est de 100 pce.

### I-2 Charge renforçante

La composition selon l'invention comprend une charge renforçante. On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, de l'alumine, ou encore un coupage de ces deux types de charge.

Comme noirs de carbone conviennent tous les noirs de carbone, notamment les noirs dits de grade pneumatique. Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

La composition peut contenir un type de silice ou un coupage de plusieurs silices. La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices « Ultrasil 7000 » et « Ultrasil 7005 » de la société Degussa, les silices « Zeosil » 1165MP, 1135MP et 1115MP de la société Rhodia, la silice « Hi-Sil EZ150G » de la société PPG, les silices « Zeopol » 8715, 8745 et 8755 de la Société Huber, des silices précipitées traitées telles que par exemple les silices "dopées" à l'aluminium décrites dans la demande EP-A-0735088 ou les silices à haute surface spécifique telles que décrites dans la demande WO 03/16837.

La silice a de préférence une surface BET comprise entre 45 et 400 m2/g, plus préférentiellement comprise entre 60 et 300 m2/g.

Ces compositions peuvent optionnellement également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des acides gras, des polyéthers, des amines primaires, secondaires ou tertiaires, des polyorganosiloxanes hydroxylés ou hydrolysables.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (III) suivante:

(III) Z - A - Sx - A - Z ,

dans laquelle:
- x est un entier de 2 à 8 (de préférence de 2 à 5) ;
- A est un radical hydrocarboné divalent (de préférence des groupements alkylène en C1-C18 ou des groupements arylène en C6-C12, plus particulièrement des alkylènes en C1-C10, notamment en C1-C4, en particulier le propylène) ;
- Z répond à l'une des formules ci-après: 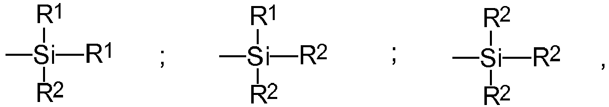 dans lesquelles:
   - les radicaux R1, substitués ou non substitués, identiques ou différents entre eux, représentent un groupe alkyle en C1-C18, cycloalkyle en C5-C18 ou aryle en C6-C18 (de préférence des groupes alkyle en C1-C6, cyclohexyle ou phényle, notamment des groupes alkyle en C1-C4, plus particulièrement le méthyle et/ou l'éthyle).
   - les radicaux R2, substitués ou non substitués, identiques ou différents entre eux, représentent un groupe alkoxyle en C1-C18 ou cycloalkoxyle en C5-C18 (de préférence un groupe choisi parmi alkoxyles en C1-C8 et cycloalkoxyles en C5-C8, plus préférentiellement encore un groupe choisi parmi alkoxyles en C1-C4, en particulier méthoxyle et éthoxyle).

Dans le cas d'un mélange d'alkoxysilanes polysulfurés répondant à la formule (III) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C1-C4)-alkyl(C1-C4)silyl-alkyl(C1-C4)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C2H5O)3Si(CH2)3S2]2 ou le disulfure de bis-(triéthoxysilylpropyle), en abrégé TESPD, de formule [(C2H5O)3Si(CH2)3S]2. On citera également à titre d'exemples préférentiels les polysulfures (notamment disulfures, trisulfures ou tétrasulfures) de bis-(monoalkoxyl(C1-C4)-dialkyl(C1-C4)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera également les POS (polyorganosiloxanes) bifonctionnels ou encore des polysulfures d'hydroxysilane (R2 = OH dans la formule III ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc conformes à l'invention, la teneur en agent de couplage est préférentiellement comprise entre 4 et 12 pce, plus préférentiellement entre 5 et 11 pce et encore plus préférentiellement entre 5 et 9 pce.

L'homme du métier comprendra qu'à titre de charge équivalente de la silice décrite dans le présent paragraphe, pourrait être utilisée une charge renforçante d'une autre nature, notamment organique, dès lors que cette charge renforçante serait recouverte d'une couche de silice, ou bien comporterait à sa surface des sites fonctionnels, notamment hydroxyles, nécessitant l'utilisation d'un agent de couplage pour établir la liaison entre la charge et l'élastomère.

L'état physique sous lequel se présente la charge renforçante est indifférent, que ce soit sous forme de poudre, de microperles, de granulés, de billes ou toute autre forme densifiée appropriée.

La composition selon l'invention comprend un taux de charge renforçante qui est compris dans un domaine allant de de 60 à 110 parties en poids pour cent parties en poids d'élastomère (pce). D'une manière préférentielle, le taux de charge renforçante totale (préférentiellement noir de carbone et/ou silice) est de 65 à 105 pce, plus préférentiellement de 70 à 100. En dessous de 60 pce de charge, la composition pourrait être moins performante en résistance à l'usure tandis qu'au-dessus de 110 pce de charge, la composition pourrait être moins performante en résistance au roulement.

Par charge renforçante majoritaire, on entend celle qui présente le plus fort taux parmi les charges renforçantes présentes dans la composition. Notamment, on entend par charge renforçante majoritaire toute charge renforçante qui représente au moins 50% en poids des charges renforçantes présentes, préférentiellement plus de 50% et plus préférentiellement plus de 60%.

Selon un mode de réalisation, la composition comprend de la silice comme charge majoritaire, en coupage éventuel avec du noir de carbone, comme charge minoritaire. Dans ce cas, le taux de silice est préférentiellement compris dans un domaine allant de 55 à 105 pce, de préférence de 60 à 100 pce. Le taux de noir est préférentiellement compris dans un domaine allant de 0 à 50 pce, de préférence de 1 à 30 pce. Le taux de noir est préférentiellement compris dans un domaine allant de 1 à 5 pce et préférentiellement inférieur ou égal à 4 pce.

### I-3 Système de vulcanisation

Le système de vulcanisation proprement dit est à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 10 pce, plus préférentiellement compris entre 0,5 et 5 pce, en particulier entre 0,5 et 3 pce lorsque la composition de l'invention est destinée, selon un mode préférentiel de l'invention, à constituer une bande de roulement de pneumatique.

Le système de vulcanisation de la composition selon l'invention peut également comprendre un ou plusieurs accélérateurs additionnels, par exemple les composés de la famille des thiurames, les dérivés dithiocarbamates de zinc, les sulfénamides, les guanidines ou les thiophosphates. On peut utiliser en particulier tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-tert-butyl-2-benzothiazyle sulfénamide (en abrégé "TBBS"), N-tert-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

### I-4 Combinaison de plastifiants

La composition selon l'invention comporte en outre une combinaison de plastifiants ou système plastifiant. Cette combinaison de plastifiant est composée au moins d'une résine hydrocarbonée de faible Tg et d'au moins un plastifiant complémentaire choisi dans le groupe constitué par les huiles plastifiantes, les résines hydrocarbonées de Tg supérieure à 20°C et leurs mélanges.

Le taux total de plastifiant dans la composition est compris dans un domaine allant de 25 à 65 pce, plus préférentiellement de 30 à 65 pce, de préférence de 35 à 60 pce, en particulier de 40 à 55 pce. En dessous de 30 pce, et surtout en dessous de 25 pce de plastifiant, la composition pourrait être moins performante quant à la processabilité industrielle.

### 1-4-1 Résine de faible Tg

Le premier plastifiant de la combinaison de plastifiant de la composition de l'invention est une résine hydrocarbonée visqueuse à 20 °C, dit à « faible Tg », c'est-à-dire qui par définition présente une Tg comprise dans un domaine allant de -40 °C à 20°C.

De préférence, la résine plastifiante hydrocarbonée de faible Tg présente au moins une quelconque des caractéristiques suivantes :
- une Tg comprise entre -40°C et 0°C, plus préférentiellement entre -30°C et 0°C et plus préférentiellement encore entre -20°C et 0°C ;
- une masse moléculaire moyenne en nombre (Mn) inférieure à 800 g/mol, de préférence inférieure à 600 g/mol et plus préférentiellement inférieure à 400 g/mol ;
- un point de ramollissement compris dans un domaine allant de 0 à 50°C, préférentiellement de 0 à 40°C, plus préférentiellement de 10 à 40°C, de préférence de 10 à 30°C ;
- un indice de polymolécularité (Ip) inférieur à 3, plus préférentiellement inférieur à 2 (rappel : Ip = Mw/Mn avec Mw masse moléculaire moyenne en poids).

Plus préférentiellement, cette résine plastifiante hydrocarbonée de faible Tg présente l'ensemble des caractéristiques préférentielles ci-dessus.

Le point de ramollissement est mesuré selon la norme ISO 4625 (méthode "Ring and Ball"). La Tg est mesurée selon la norme ASTM D3418 (1999). La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Les résines hydrocarbonées thermoplastiques peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

A titre de monomères aromatiques conviennent par exemple le styrène, l'alpha-méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C9 (ou plus généralement d'une coupe C8 à C10). De préférence, le monomère vinylaromatique est du styrène ou un monomère vinylaromatique issu d'une coupe C9 (ou plus généralement d'une coupe C8 à C10). De préférence, le monomère vinylaromatique est le monomère minoritaire, exprimé en fraction molaire, dans le copolymère considéré.

Selon un mode de réalisation particulièrement préférentiel, la résine plastifiante hydrocarbonée est choisie dans le groupe constitué par les résines d'homopolymères ou copolymères de cyclopentadiène (en abrégé CPD) ou dicyclopentadiène (en abrégé DCPD), les résines d'homopolymères ou copolymères terpène, les résines d'homopolymères ou copolymères terpène phénol, les résines d'homopolymères ou copolymères de coupe C5, les résines d'homopolymères ou copolymères de coupe C9, et les mélanges de ces résines, utilisables seules ou en combinaison avec un plastifiant liquide, par exemple une huile MES ou TDAE. Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. Parmi les résines plastifiantes hydrocarbonées ci-dessus, on citera notamment les résines d'homo- ou copolymères d'alphapinène, betapinène, dipentène ou polylimonène.

Les résines préférentielles ci-dessus sont bien connues de l'homme du métier et disponibles commercialement, par exemple vendues en ce qui concerne les :
- résines aliphatiques : par la société CRAY VALLEY sous la dénomination« Wingtack 10» (Mn=480 g/mol ; Mw=595 g/mol ; Ip=1.2; SP=10°C; Tg=-28°C),
- résines coumarone indène : par la société Rütgers Chemicals sous la dénomination « Novares C30 » (Mn=295 g/mol ; Mw=378 g/mol ; Ip=1.28 ; SP=25°C ; Tg=-19°C) ;
- résines de coupe C9 aliphatique et aromatique : par la société Rütgers Chemicals sous la dénomination « Novares TT30 » (Mn=329 g/mol ; Mw=434 g/mol ; Ip=1.32; SP=25°C ; Tg=-12°C) ou par la société Kolon sous la dénomitation « Hikotac LP-9800 » (Mn=249 g/mol ; Mw=282 g/mol ; Ip=1,13 ; SP=20°C ; Tg=-27°C).

Le taux de résine plastifiante hydrocarbonée de faible Tg est supérieur ou égal à 10 pce, de préférence compris dans un domaine allant de plus de 10 pce à 60 pce, préférentiellement de 12 à 40 pce, encore plus préférentiellement entre 15 et 35 pce. En effet, en dessous de 10 pce de résine de faible Tg, la composition pourrait présenter des problèmes de collant et donc de processabilité industrielle.

### I-4-2 Résine de haute Tg

Le deuxième plastifiant de la combinaison de plastifiants de la composition peut être une résine hydrocarbonée thermoplastique dont la Tg est supérieure à 20°C. Cette résine est un solide à température ambiante (23°C), par opposition à un composé plastifiant liquide tel qu'une huile ou visqueux tel qu'une résine de faible Tg.

De préférence, la résine plastifiante hydrocarbonée thermoplastique présente au moins une quelconque des caractéristiques suivantes :
- une Tg supérieure à 30°C ;
- une masse moléculaire moyenne en nombre (Mn) comprise entre 400 et 2000 g/mol, plus préférentiellement entre 500 et 1500 g/mol ;
- un indice de polymolécularité (Ip) inférieur à 3, plus préférentiellement inférieur à 2 (rappel : Ip = Mw/Mn avec Mw masse moléculaire moyenne en poids).

Plus préférentiellement, cette résine plastifiante hydrocarbonée thermoplastique présente l'ensemble des caractéristiques préférentielles ci-dessus.

La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Les résines hydrocarbonées thermoplastiques peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

A titre de monomères aromatiques conviennent par exemple le styrène, l'alpha-méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C9 (ou plus généralement d'une coupe C8 à C10). De préférence, le monomère vinylaromatique est du styrène ou un monomère vinylaromatique issu d'une coupe C9 (ou plus généralement d'une coupe C8 à C10). De préférence, le monomère vinylaromatique est le monomère minoritaire, exprimé en fraction molaire, dans le copolymère considéré.

Selon un mode de réalisation particulièrement préférentiel, la résine plastifiante hydrocarbonée est choisie dans le groupe constitué par les résines d'homopolymères ou copolymères de cyclopentadiène (en abrégé CPD) ou dicyclopentadiène (en abrégé DCPD), les résines d'homopolymères ou copolymères terpène, les résines d'homopolymères ou copolymères terpène phénol, les résines d'homopolymères ou copolymères de coupe C5, les résines d'homopolymères ou copolymères de coupe C9, les résines d'homopolymères et copolymères d'alpha-méthyl-styrène et les mélanges de ces résines, utilisables seules ou en combinaison avec un plastifiant liquide, par exemple une huile MES ou TDAE. Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. Parmi les résines plastifiantes hydrocarbonées ci-dessus, on citera notamment les résines d'homo- ou copolymères d'alphapinène, betapinène, dipentène ou polylimonène.

Les résines préférentielles ci-dessus sont bien connues de l'homme du métier et disponibles commercialement, par exemple vendues en ce qui concerne les :
- résines polylimonène : par la société DRT sous la dénomination "Dercolyte L120" (Mn=625 g/mol ; Mw=1010 g/mol ; Ip=1,6; Tg=72°C) ou par la société ARIZONA sous la dénomination "Sylvagum TR7125C" (Mn=630 g/mol ; Mw=950 g/mol ; Ip=1,5 ; Tg=70°C) ;
- résines de copolymère coupe C5/ vinylaromatique, notamment coupe C5/ styrène ou coupe C5/ coupe C9 : par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1100", par Exxon sous dénominations "Escorez 2101" et "Escorez 1273" ;
- résines de copolymère limonène/ styrène : par DRT sous dénomination "Dercolyte TS 105" de la société DRT, par ARIZONA Chemical Company sous dénominations "ZT115LT" et "ZT5100".

A titre d'exemples d'autres résines préférentielles, on peut citer également les résines alpha-méthyl-styrène modifiées phénol. Pour caractériser ces résines modifiées phénol, on rappelle qu'il est utilisé de manière connue un indice dit "indice hydroxyle" (mesuré selon norme ISO 4326 et exprimé en mg KOH/g). Les résines alpha-méthyl-styrène, notamment celles modifiées phénol, sont bien connues de l'homme du métier et disponibles commercialement, par exemple vendues par la société Arizona Chemical sous les dénominations "Sylvares SA 100" (Mn = 660 g/mol ; Ip = 1,5 ; Tg = 53°C) ; "Sylvares SA 120" (Mn = 1030 g/mol ; Ip = 1,9 ; Tg = 64°C) ; "Sylvares 540" (Mn = 620 g/mol ; Ip = 1,3 ; Tg = 36°C ; indice d'hydroxyle = 56 mg KOH/g) ; "Silvares 600" (Mn = 850 g/mol ; Ip = 1,4 ; Tg = 50°C ; indice d'hydroxyle = 31 mg KOH/g).

De préférence, le taux de résine plastifiante hydrocarbonée est compris dans un domaine allant de 5 à 55 pce, préférentiellement allant de 7 à 40 pce, encore plus préférentiellement de 10 à 35 pce.

### I-4-3 Huile plastifiante

Le deuxième plastifiant de la combinaison de plastifiants de la composition peut être une huile d'extension (ou résine plastifiante) liquide à 20 °C, dit à « basse Tg », c'est-à-dire qui par définition présente une Tg inférieure à -20 °C, de préférence inférieure à -40 °C.

Toute huile d'extension, qu'elle soit de nature aromatique ou non-aromatique connue pour ses propriétés plastifiantes vis-à-vis d'élastomères diéniques, est utilisable. A température ambiante (20°C), ces huiles, plus ou moins visqueuses, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Conviennent particulièrement les huiles d'extension choisies dans le groupe constitué par les huiles naphténiques (à basse ou haute viscosité, notamment hydrogénées ou non), les huiles paraffiniques, les huiles MES (Medium Extracted Solvates), les huiles TDAE (Treated Distillate Aromatic Extracts), les huiles minérales, les huiles végétales, les plastifiants éthers, les plastifiants esters, les plastifiants phosphates, les plastifiants sulfonates et les mélanges de ces composés. Par exemple, on peut citer ceux qui contiennent entre 12 et 30 atomes de carbone, par exemple le trioctyle phosphate. A titre d'exemples de plastifiants esters non aqueux et non hydrosolubles, on peut citer notamment les composés choisis dans le groupe constitué par les trimellitates, les pyromellitates, les phtalates, les 1,2-cyclohexane dicarboxylates, les adipates, les azélaates, les sébacates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en C18, c'est-à-dire choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

Selon un mode particulier de réalisation de l'invention, lorsqu'elle est incluse dans la composition le taux d'huile d'extension est compris dans un domaine allant de 2 à 40 pce, plus préférentiellement de 5 à 30 pce. De manière préférentielle également, la composition de l'invention ne comprend pas d'huile plastifiante.

### I-5 Rapport des taux de charge et de plastifiant

Selon l'invention, les taux de charge renforçante et de plastifiant sont tels que le rapport du taux total de charge et du taux total de plastifiant est compris dans un domaine allant de 1,8 à 2,5. En dessous de 1,8 la composition pourrait présenter une moindre dureté entrainant une moindre performance de comportement véhicule tandis qu'au-dessus de 2,5 la composition pourrait présenter un fort mooney entrainant une moindre processabilité industrielle.

De préférence, le rapport du taux total de charge et du taux total de plastifiant est compris dans un domaine allant de 1,8 à 2,4 et de préférence de 2 à 2,4, et plus préférentiellement encore de 2,1 à 2,4.

### I-6 Autres additifs possibles

Les compositions de caoutchouc conformes à l'invention comportent optionnellement également tout ou partie des additifs usuels habituellement utilisés dans les compositions d'élastomères destinées notamment à la fabrication de bandes de roulement, comme par exemple des pigments, des agents de protection tels que cires anti-ozone, anti-ozonants chimiques, anti-oxydants, des agents plastifiants autres que ceux précédemment décrits, des agents anti-fatigue, des résines renforçantes, des accepteurs (par exemple résine phénolique novolaque) ou des donneurs de méthylène (par exemple HMT ou H3M).

Bien entendu, les compositions conformes à l'invention peuvent être utilisées seules ou en coupage (i.e., en mélange) avec toute autre composition de caoutchouc utilisable pour la fabrication de pneumatiques.

Il va de soi que l'invention concerne les compositions de caoutchouc précédemment décrites tant à l'état dit "cru" ou non réticulé (i.e., avant cuisson) qu'à l'état dit "cuit" ou réticulé, ou encore vulcanisé (i.e., après réticulation ou vulcanisation).

### II- Préparation des compositions de caoutchouc

Les compositions sont fabriquées dans des mélangeurs appropriés, en utilisant deux phases de préparation successives bien connues de l'homme du métier: une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une deuxième phase de travail mécanique (parfois qualifiée de phase "productive") à plus basse température, typiquement inférieure à 110°C, par exemple entre 60°C et 100°C, phase de finition au cours de laquelle est incorporé le système de réticulation ou vulcanisation; de telles phases ont été décrites par exemple dans les demandes EP-A-0501227, EP-A-0735088, EP-A-0810258, WO00/05300 ou WO00/05301.

La première phase (non-productive) est conduite préférentiellement en plusieurs étapes thermomécaniques. Au cours d'une première étape on introduit, dans un mélangeur approprié tel qu'un mélangeur interne usuel, les élastomères, les charges renforçantes, la combinaison de plastifiants (et éventuellement les agents de couplage et/ou d'autres ingrédients à l'exception du système de vulcanisation), à une température comprise entre 20°C et 100°C et, de préférence, entre 25°C et 100°C. Après quelques minutes, préférentiellement de 0,5 à 2 min et une montée de la température à 90°C à 100°C, les autres ingrédients (c'est-à-dire, ceux qui restent si tous n'ont pas été mis au départ) sont ajoutés en une fois ou par parties, à l'exception du système de vulcanisation durant un mélangeage allant de 20 secondes à quelques minutes. La durée totale du malaxage, dans cette phase non-productive, est de préférence comprise entre 2 et 10 minutes à une température inférieure ou égale à 180°C, et préférentiellement inférieure ou égale à 170°C.

Après refroidissement du mélange ainsi obtenu, on incorpore alors le système de vulcanisation à basse température (typiquement inférieure à 100°C), généralement dans un mélangeur externe tel qu'un mélangeur à cylindres; le tout est alors mélangé (phase productive) pendant quelques minutes, par exemple entre 5 et 15 min.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis afin d'obtenir des produits tels qu'une bande de roulement. Ces produits peuvent ensuite être utilisés pour la fabrication de pneumatiques, selon les techniques connues de l'homme du métier.

La vulcanisation (ou cuisson) est conduite de manière connue à une température généralement comprise entre 130°C et 200°C, sous pression, pendant un temps suffisant qui peut varier par exemple entre 5 et 90 min en fonction notamment de la température de cuisson, du système de vulcanisation adopté, de la cinétique de vulcanisation de la composition considérée ou encore de la taille du pneumatique.

Les exemples qui suivent illustrent l'invention sans toutefois la limiter.

### III- Exemples de réalisation de l'invention

### 111-1 Préparation des exemples

Dans les exemples qui suivent les compositions caoutchouteuses ont été réalisées comme décrit précédemment.

### III-2 Caractérisation des exemples

Dans les exemples, les compositions de caoutchouc sont caractérisées avant et/ou après cuisson comme indiqué ci-après.

### - Viscosité Mooney ou Plasticité Mooney (avant cuisson):

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (MS 1+4) est exprimée en "unité Mooney" (UM, avec 1 UM=0,83 Newton.mètre). Plus la valeur de Mooney est basse, plus la viscosité avant cuisson est faible et meilleure est la processabilité de la composition.

### - Dureté Shore A :

La dureté shore A des compositions après cuisson est appréciée conformément à la norme ASTM D 2240-86.

### - Propriétés dynamiques (après cuisson):

Les propriétés dynamiques G* et tan(δ)max sont mesurées sur un viscoanalyseur (Metravib V A4000), selon la norme ASTM D 5992 - 96. On enregistre la réponse d'un échantillon de composition vulcanisée (éprouvette cylindrique de 4 mm d'épaisseur et de 400 mm2 de section), soumis à une sollicitation sinusoïdale en cisaillement simple alterné, à la fréquence de 10Hz, à 23°C selon la norme ASTM D 1349 - 99. On effectue un balayage en amplitude de déformation crête à crête de 0,1 à 50% (cycle aller), puis de 50% à 1 % (cycle retour). Les résultats exploités sont le module complexe de cisaillement dynamique (G*) et le facteur de perte (tan δ). Pour le cycle retour, on indique la valeur maximale de tan δ observée (tan(δ)max), ainsi que l'écart de module complexe (ΔG*) entre les valeurs à 0,1% et à 50% de déformation (effet Payne). Pour les valeurs de tan(δ)max à 23°C, plus la valeur est basse, plus la composition aura une hystérèse faible et donc un résistance au roulement faible.

### III-3 Exemples

Les compositions sont fabriquées avec une introduction de l'ensemble des constituants sur un mélangeur interne, à l'exception du système de vulcanisation. Les agents de vulcanisation (soufre et accélérateur) sont introduits sur un mélangeur externe à basse température (les cylindres constitutifs du mélangeur étant à environ 30°C).

Les exemples présentés dans le tableau 1 ont pour objet de comparer les différentes propriétés de caoutchouterie de compositions témoins (T1 à T8) aux compositions C1 à C3 conformes à l'invention. Les résultats de mesure des propriétés mesurées avant et après cuisson sont présentés au tableau 2.

Par rapport aux compositions témoins, on note que les compositions conformes à l'invention présentent le meilleur compromis de performances entre le Mooney, la dureté et la mesure de Tan(δ)max à 23°C. En effet toutes les compositions conformes à l'invention permettent d'améliorer au moins une propriété par rapport aux témoins pris séparément. Ces résultats montrent que les compositions de l'invention permettent de bonnes performances sur les aspects essentiels que sont la processabilité, le comportement routier et la résistance au roulement. Aucune des compositions témoin ne permet un aussi bon compromis de toutes ces performances à la fois.

**Tableau 1**

| Compositions | **C1** | **C2** | **C3** | **T1** | **T2** | **T3** | **T4** | **T5** | **T6** | **T7** | **T8** |
|---|---|---|---|---|---|---|---|---|---|---|---|
| SBR1 (1) | 100.0 | 100.0 | 100.0 | 100.0 | - | 100.0 | 100.0 | 100.0 | 100.0 | 100.0 | 100.0 |
| SBR2 (2) | - | - | - | - | 100.0 | - | - | - | - | - | - |
| Noir de carbone (3) | 3.0 | 3.0 | 3.0 | 3.0 | 3.0 | 3.0 | 3.0 | 3.0 | 3.0 | 3.0 | 3.0 |
| Silice (4) | 87.0 | 57.0 | 107.0 | 87.0 | 87.0 | 87.0 | 87.0 | 87.0 | 87.0 | 42.0 | 107.0 |
| Taux de charge total | 90.0 | 60.0 | 110.0 | 90.0 | 90.0 | 90.0 | 90.0 | 90.0 | 90.0 | 45.0 | 110.0 |
| Résine de faible Tg (5) | 32.5 | 14.5 | 35.0 | - | 32.5 | 11.0 | 8.0 | 3.0 | 56.5 | 32.5 | 12.0 |
| Résine de haute Tg (6) | 13.5 | 10.5 | 15.0 | 36.0 | 13.5 | 11.0 | 38.0 | 43.0 | 13.5 | 13.5 | 11.0 |
| Huile plastifiante (7) | - | - | 10.0 | 8.0 | - | - | - | - | - | - | - |
| Taux de plastifiant total | 46.0 | 25.0 | 60.0 | 44.0 | 46.0 | 22.0 | 46.0 | 46.0 | 70.0 | 46.0 | 23.0 |
| Charge / Plastifiant | 2.0 | 2.4 | 1.8 | 2.0 | 2.0 | 4.1 | 2.0 | 2.0 | 1.3 | 1.0 | 5.2 |
| Agent de couplage (8) | 7.0 | 4.6 | 8.5 | 7.0 | 7.0 | 7.0 | 7.0 | 7.0 | 7.0 | 3.4 | 9.4 |
| Antioxydants (9) | 6.5 | 6.5 | 6.5 | 6.5 | 6.5 | 6.5 | 6.5 | 6.5 | 6.5 | 6.5 | 6.5 |
| Acide stéarique (10) | 3.0 | 3.0 | 3.0 | 3.0 | 3.0 | 3.0 | 3.0 | 3.0 | 3.0 | 3.0 | 3.0 |
| DPG (11) | 1.8 | 1.6 | 2.1 | 1.8 | 1.8 | 1.8 | 1.8 | 1.8 | 1.8 | 1.6 | 2.3 |
| ZNO (12) | 0.9 | 0.9 | 0.9 | 0.9 | 0.9 | 0.9 | 0.9 | 0.9 | 0.9 | 0.9 | 0.9 |
| Accélérateur (13) | 2.3 | 2.3 | 2.3 | 2.3 | 2.3 | 2.3 | 2.3 | 2.3 | 2.3 | 2.3 | 2.3 |
| Soufre | 1.0 | 1.0 | 1.0 | 1.0 | 1.0 | 1.0 | 1.0 | 1.0 | 1.0 | 1.0 | 1.0 |

| | | | | | | | | | | | |
|---|---|---|---|---|---|---|---|---|---|---|---|
| (1) SBR (étoilé Sn) avec 26% de motif styrène et 24% de motif 1,2 de la partie butadiénique (Tg = -48°C) fonctionnel silanol en bout de chaine (2) SBR (étoilé Sn) avec 44% de motif styrène et 41% de motif 1,2 de la partie butadiénique (Tg = -12°C) silanol en bout de chaine (3) Grade ASTM N234 (société Cabot) (4) Silice « Zeosil 1165 MP » de la société Rhodia type « HDS » (5) Résine hydrocarbonée de faible Tg « HIKOTACK LP-9800» de la société Kolon (6) Résine hydrocarbonée de haute Tg C9/DCPD «Escorez 5600» de société EXXON (Tg = 55°C) (7) Trioleate de glycerol, huile de tournesol à 85% en poids d'acide oléique « Lubrirob Tod 1880 » de la société Novance (8) Agent de couplage : TESPT (« Si69 » de la société Evonik - Degussa) (9) N-(1,3-diméthylbutyl)-N'-phényl-p-phénylènediamine (Santoflex 6-PPD) de la société Flexsys, 2,2,4-Trimethyl-1,2-Dihydroquinoline (TMQ) et Cire anti-ozone (10) Stéarine « Pristerene 4931 » de la société Uniqema (11) Diphénylguanidine « Perkacit DPG » de la société Flexsys (12) Oxyde de zinc de grade industriel - société Umicore (13) N-cyclohexyl-2-benzothiazol-sulfénamide (« Santocure CBS » de la société Flexsys) | | | | | | | | | | | |

**Tableau 2**

| Compositions | **C1** | **C2** | **C3** | **T1** | **T2** | **T3** | **T4** | **T5** | **T6** | **T7** | **T8** |
|---|---|---|---|---|---|---|---|---|---|---|---|
| Mooney | 62.2 | 65.5 | 54.5 | 68.1 | 42.6 | 78.4 | 68.6 | 70.3 | 43.8 | 35.9 | 92.0 |
| Dureté Shore A | 60.5 | 58.0 | 60.2 | 60.4 | 59.5 | 71.6 | 59.6 | 61.1 | 49.8 | 45.0 | 78.4 |
| Tan(δ) max à 23°C | 0.28 | 0.16 | 0.30 | 0.31 | 0.61 | 0.30 | 0.32 | 0.37 | 0.22 | 0.12 | 0.38 |

## Revendications

1. Composition de caoutchouc à base d'au moins
- un élastomère diénique de température de transition vitreuse (Tg) inférieure à -40°C,
- une charge renforçante à un taux compris dans un domaine allant de 60 à 110 parties en poids pour cent parties en poids d'élastomère (pce),
- un système de vulcanisation,
- une combinaison de plastifiants, ladite combinaison de plastifiants comprenant plus de 10 pce (parties en poids pour cent parties en poids d'élastomère) d'au moins une résine hydrocarbonée de température de transition vitreuse (Tg) comprise entre -40°C et 20°C et au moins un plastifiant complémentaire choisi dans le groupe constitué par les huiles plastifiantes, les résines hydrocarbonées de Tg supérieure à 20°C et leurs mélanges, le taux total de plastifiant étant compris dans un domaine allant de 25 à 65 pce,
- les taux de charge renforçante et de plastifiant étant tels que le rapport du taux total de charge et du taux total de plastifiant est compris dans un domaine allant de 1,8 à 2,5.

2. Composition selon la revendication 1, dans laquelle ledit élastomère diénique de Tg inférieure à -40°C est choisi dans le groupe constitué par les polybutadiènes, les polyisoprènes de synthèse, le caoutchouc naturel, les copolymères de butadiène, les copolymères d'isoprène et les mélanges de ces élastomères.

3. Composition selon l'une quelconque des revendications précédentes dans laquelle ledit élastomère diénique de Tg inférieure à -40°C est choisi dans le groupe constitué par les polybutadiènes, les copolymères de butadiène et de styrène, et les mélanges de ces élastomères.

4. Composition selon l'une quelconque des revendications précédentes dans laquelle ledit élastomère diénique de Tg inférieure à -40°C comprend un copolymère statistique de butadiène et de styrène (SBR) à un taux compris dans un domaine allant de 80 à 100 pce, de préférence à un taux de 100 pce.

5. Composition selon l'une quelconque des revendications précédentes dans laquelle le taux de charge renforçante est compris dans un domaine allant de 65 à 105 pce, de préférence de 70 à 100 pce.

6. Composition selon l'une quelconque des revendications 1 à 4 dans laquelle la charge renforçante majoritaire est de la silice.

7. Composition selon l'une quelconque des revendications précédentes dans laquelle le taux total de plastifiants est compris dans un domaine allant de 30 à 65 pce, de 35 à 60 pce, plus préférentiellement de 40 à 55 pce.

8. Composition selon l'une quelconque des revendications précédentes dans laquelle le taux de résine hydrocarbonée de Tg comprise entre -40°C et 20°C est compris dans un domaine allant de plus de 10 à 60 pce, de préférence de 12 à 40 pce, plus préférentiellement de 15 à 35 pce.

9. Composition selon l'une quelconque des revendications précédentes dans laquelle la résine hydrocarbonée précédemment mentionnée comme résine hydrocarbonée de Tg comprise entre -40°C et 20°C présente une Tg comprise entre - 40°C et 0°C, plus préférentiellement entre -30°C et 0°C et plus préférentiellement encore entre -20°C et 0°C.

10. Composition selon l'une quelconque des revendications précédentes dans laquelle la résine hydrocarbonée précédemment mentionnée comme résine hydrocarbonée de Tg comprise entre -40°C et 20°C présente une masse moléculaire moyenne en nombre inférieure à 800 g/mol, de préférence inférieure à 600 g/mol.

11. Composition selon l'une quelconque des revendications précédentes dans laquelle le plastifiant complémentaire est une résine hydrocarbonée de Tg supérieure à 20°C, dont le taux est compris dans un domaine allant de 5 à 55 pce, de préférence de 7 à 40 pce.

12. Composition selon l'une quelconque des revendications précédentes comprenant en outre dans la combinaison de plastifiants, une huile plastifiante.

13. Composition selon l'une quelconque des revendications 1 à 11 ne comprenant pas d'huile plastifiante dans la combinaison de plastifiants.

14. Composition selon l'une quelconque des revendications précédentes dans laquelle le rapport du taux total de charge et du taux total de plastifiant est compris dans un domaine allant de 1,8 à 2,4, de préférence de 2 à 2,4.

15. Pneumatique comprenant une composition selon l'une quelconque des revendications 1 à 14.

## Patentansprüche

1. Kautschukzusammensetzung auf Basis von mindestens
- einem Dienelastomer mit einer Glasübergangstemperatur (Tg) von weniger als -40 °C,
- einem verstärkenden Füllstoff in einem Gehalt in einem Bereich von 60 bis 110 Gewichtsteilen pro hundert Gewichtsteile Elastomer (phe),
- einem Vulkanisationssystem,
- einer Kombination von Weichmachern, wobei die Kombination von Weichmachern mehr als 10 phe (Gewichtsteile pro hundert Gewichtsteile Elastomer) mindestens eines Kohlenwasserstoffharzes mit einer Glasübergangstemperatur (Tg) zwischen -40 °C und 20 °C und mindestens einen ergänzenden Weichmacher aus der Gruppe bestehend aus Weichmacherölen, Kohlenwasserstoffharzen mit einer Tg von mehr als 20 °C und Mischungen davon umfasst, wobei der Gesamtgehalt an Weichmacher in einem Bereich von 25 bis 65 phe liegt,
- wobei die Gehalte an verstärkendem Füllstoff und Weichmacher so beschaffen sind, dass das Verhältnis des Gesamtgehalts an Füllstoff und des Gesamtgehalts an Weichmacher in einem Bereich von 1,8 bis 2,5 liegt.

2. Zusammensetzung nach Anspruch 1, wobei das Dienelastomer mit einer Tg von weniger als -40 °C aus der Gruppe bestehend aus Polybutadienen, synthetischen Polyisoprenen, Naturkautschuk, Butadien-Copolymeren, Isopren-Copolymeren und Mischungen dieser Elastomere ausgewählt ist.

3. Zusammensetzung nach einem der vorhergehenden Ansprüche, wobei das Dienelastomer mit einer Tg von weniger als -40 °C aus der Gruppe bestehend aus Polybutadienen, Copolymeren von Butadien und Styrol und Mischungen dieser Elastomere ausgewählt ist.

4. Zusammensetzung nach einem der vorhergehenden Ansprüche, wobei das Dienelastomer mit einer Tg von weniger als -40 °C ein statistisches Copolymer von Butadien und Styrol (SBR) in einem Gehalt in einem Bereich von 80 bis 100 phe, vorzugsweise in einem Gehalt von 100 phe, umfasst.

5. Zusammensetzung nach einem der vorhergehenden Ansprüche, wobei der Gehalt an verstärkendem Füllstoff in einem Bereich von 65 bis 105 phe, vorzugsweise von 70 bis 100 phe, liegt.

6. Zusammensetzung nach einem der Ansprüche 1 bis 4, wobei es sich bei dem hauptsächlichen verstärkenden Füllstoff und Kieselsäure handelt.

7. Zusammensetzung nach einem der vorhergehenden Ansprüche, wobei der Gesamtgehalt an Weichmachern in einem Bereich von 30 bis 65 phe, von 35 bis 60 phe, weiter bevorzugt von 40 bis 55 phe, liegt.

8. Zusammensetzung nach einem der vorhergehenden Ansprüche, wobei der Gehalt an Kohlenwasserstoffharz mit einer Tg zwischen -40 °C und 20 °C in einem Bereich von mehr als 10 bis 60 phe, vorzugsweise von 12 bis 40 phe, weiter bevorzugt von 15 bis 35 phe, liegt.

9. Zusammensetzung nach einem der vorhergehenden Ansprüche, wobei das oben als Kohlenwasserstoffharz mit einer Tg zwischen -40 °C und 20 °C erwähnte Kohlenwasserstoffharz eine Tg zwischen -40 °C und 0 °C, weiter bevorzugt zwischen -30 °C und 0 °C und noch weiter bevorzugt zwischen -20 °C und 0 °C aufweist.

10. Zusammensetzung nach einem der vorhergehenden Ansprüche, wobei das oben als Kohlenwasserstoffharz mit einer Tg zwischen -40 °C und 20 °C erwähnte Kohlenwasserstoffharz eine zahlenmittlere Molmasse von weniger als 800 g/mol, vorzugsweise weniger als 600 g/mol, aufweist.

11. Zusammensetzung nach einem der vorhergehenden Ansprüche, wobei es sich bei dem ergänzenden Weichmacher um ein Kohlenwasserstoffharz mit einer Tg von mehr als 20 °C handelt, dessen Gehalt in einem Bereich von 5 bis 55 phe, vorzugsweise von 7 bis 40 phe, liegt.

12. Zusammensetzung nach einem der vorhergehenden Ansprüche, die außerdem in der Kombination von Weichmachern ein Weichmacheröl umfasst.

13. Zusammensetzung nach einem der Ansprüche 1 bis 11, die in der Kombination von Weichmachern kein Weichmacheröl umfasst.

14. Zusammensetzung nach einem der vorhergehenden Ansprüche, wobei das Verhältnis des Gesamtgehalts an Füllstoff und des Gesamtgehalts an Weichmacher in einem Bereich von 1,8 bis 2,4, vorzugsweise von 2 bis 2,4, liegt.

15. Reifen, umfassend eine Zusammensetzung nach einem der Ansprüche 1 bis 14.

## Claims

1. Rubber composition based on at least
- a diene elastomer with a glass transition temperature (Tg) of less than -40°C,
- a reinforcing filler at a content within a range extending from 60 to 110 parts by weight per hundred parts by weight of elastomer (phr),
- a vulcanization system,
- a combination of plasticizers, the said combination of plasticizers comprising more than 10 phr (parts by weight per hundred parts by weight of elastomer) of at least one hydrocarbon resin with a glass transition temperature (Tg) of between -40°C and 20°C and at least one supplementary plasticizer selected from the group consisting of plasticizing oils, hydrocarbon resins with a Tg of greater than 20°C and their mixtures, the total content of plasticizer being within a range extending from 25 to 65 phr,
- the contents of reinforcing filler and of plasticizer being such that the ratio of the total content of filler to the total content of plasticizer is within a range extending from 1.8 to 2.5.

2. Composition according to Claim 1, in which the said diene elastomer with a Tg of less than -40°C is selected from the group consisting of polybutadienes, synthetic polyisoprenes, natural rubber, butadiene copolymers, isoprene copolymers and the mixtures of these elastomers.

3. Composition according to either one of the preceding claims, in which the said diene elastomer with a Tg of less than -40°C is selected from the group consisting of polybutadienes, copolymers of butadiene and styrene, and the mixtures of these elastomers.

4. Composition according to any one of the preceding claims, in which the said diene elastomer with a Tg of less than -40°C comprises a random copolymer of butadiene and styrene (SBR) at a content within a range extending from 80 to 100 phr, preferably at a content of 100 phr.

5. Composition according to any one of the preceding claims, in which the content of reinforcing filler is within a range extending from 65 to 105 phr, preferably from 70 to 100 phr.

6. Composition according to any one of Claims 1 to 4, in which the predominant reinforcing filler is silica.

7. Composition according to any one of the preceding claims, in which the total content of plasticizers is within a range extending from 30 to 65 phr, from 35 to 60 phr, more preferably from 40 to 55 phr.

8. Composition according to any one of the preceding claims, in which the content of hydrocarbon resin with a Tg of between -40°C and 20°C is within a range extending from more than 10 to 60 phr, preferably from 12 to 40 phr, more preferably from 15 to 35 phr.

9. Composition according to any one of the preceding claims, in which the hydrocarbon resin mentioned above as hydrocarbon resin with a Tg of between -40°C and 20°C exhibits a Tg of between -40°C and 0°C, more preferably between -30°C and 0°C and more preferably still between -20°C and 0°C.

10. Composition according to any one of the preceding claims, in which the hydrocarbon resin mentioned above as hydrocarbon resin with a Tg of between -40°C and 20°C exhibits a number-average molecular weight of less than 800 g/mol, preferably of less than 600 g/mol.

11. Composition according to any one of the preceding claims, in which the supplementary plasticizer is a hydrocarbon resin with a Tg of greater than 20°C, the content of which is within a range extending from 5 to 55 phr, preferably from 7 to 40 phr.

12. Composition according to any one of the preceding claims, additionally comprising, in the combination of plasticizers, a plasticizing oil.

13. Composition according to any one of Claims 1 to 11 not comprising a plasticizing oil in the combination of plasticizers.

14. Composition according to any one of the preceding claims, in which the ratio of the total content of filler to the total content of plasticizer is within a range extending from 1.8 to 2.4, preferably from 2 to 2.4.

15. Tyre comprising a composition according to any one of Claims 1 to 14.
